# EUROPEAN PATENT APPLICATION

(11) **EP 3 211 869 A1**
(43) Date of publication of application: **30.08.2017**
(21) Application number: 17157266.2
(22) Date of filing: 13.09.2006
(51) Int. Cl.: H04M 1/725

(54) **METHODS AND SYSTEMS FOR PROVIDING HAPTIC MESSAGING TO HANDHELD COMMUNICATION DEVICES**

(30) Priority: 13.09.2005 US 226910
(62) Divisional of application: 06814577.0
(71) Applicant: Immersion Corporation, San Jose, CA 95134 (US)
(72) Inventor: GRANT, Danny, A., Montreal, Québec H2S 2C8 (CA); EID, Jeffrey, Danville, CA California 94506 (US); ENDO, Shoichi, Cupertino, CA California 95014 (US)
(74) Representative: Brevalex

(57) **Abstract**

In one embodiment, a method for mapping between an event of interest and a corresponding haptic effect includes: providing a plurality of haptic effects to a user; allowing a user to associate haptic effects with one or more events of interest; and compiling the mappings made between various events of interest and corresponding haptic effects into a haptic lookup table, storable in memory.

## Description

### CROSS-REFERENCE TO RELATED APPLICATIONS

This application is a continuation-in-part of United States Patent Application Serial No. 10/538,160 in the names of inventors Danny Grant, Jeffrey Eid, and Shoichi Endo, filed on June 8, 2005, which was based on PCT Patent Application No. US03/038899, filed December 8, 2003, wherein PCT Patent Application No. US03/038899 claims the benefit of United States Provisional Patent Application Serial No. 60/431,662, filed on December 8, 2002.

### FIELD OF THE INVENTION

This invention relates generally to haptic-feedback systems. More specifically, embodiments of the present invention relate to using customized haptic-effects in a-variety of applications to convey information to users of handheld communication devices.

### BACKGROUND

As handheld communication devices become part of everyday life, device manufactures and service providers strive to enhance the versatility and performance of such devices.

Handheld communication devices in the art (e.g., mobile phones, pagers, personal digital assistants (PDAs), and the like) typically use auditory and visual cues to alert a user when incoming messages, such as voice calls and emails, are received. Such auditory and visual alerts, however, have the disadvantages of being distracting in some situations (e.g., during driving), or annoying in others (e.g., during a meeting or a concert). Likewise, they are insufficient in other situations such as a noisy environment (e.g., at a pub or in a crowd) or when a call is dropped and the user continues talking without realizing that nobody is still listening.

Although vibratory alerts are made available in some communication devices such as cellular phones, such vibratory effects cannot in accordance with the known prior art be customized or personalized according to applications, and thus are capable of conveying little information to the user. A need, therefore, exists in the art for a new sensory modality that delivers information to users of handheld communication devices in a personalized fashion.

Such sensory modality would help cut through communication clutter by prioritizing, categorizing, or highlighting messages and content as they are received. It would provide mobile phone users with better control over their handset and communications through greater flexibility, accuracy, and speed.

Moreover, engaging the sense of touch would enhance the reality of user experience. Touch unifies the spatial senses; those you use to navigate your way through the world - sight, sound, and touch. Touch produces reflex-rate response in milliseconds and supplies a completeness that sight and sound together can't replace. In short, touch makes an experience truly personal.

### SUMMARY

Embodiments of the invention relate to methods and systems for providing customized "haptic messaging" to users of handheld communication devices in a variety of applications and contexts.

In one embodiment, a method for providing haptic messaging to a hand communication device includes: associating an input signal with an event; and outputting a control signal to an actuator coupled to the hand communication device, the control signal configured to cause the actuator to output a haptic effect associated with the event.

In another embodiment, a method for providing haptic messaging to a hand communication device includes: receiving an input signal associated with a status event; and outputting a control signal to an actuator coupled to the hand communication device at a prescribed time after receiving the input signal, the control signal configured to cause the actuator to output a haptic effect associated with the status event.

In yet another embodiment, a method for mapping between an event of interest and a corresponding haptic effect includes: providing a plurality of haptic effects to a user; allowing a user to associate haptic effects with one or more events of interest; and compiling the mappings made between various events of interest and corresponding haptic effects into a haptic lookup table, storable in memory.

Further details and advantages of embodiments of the invention are set forth below.

### BRIEF DESCRIPTION OF THE FIGURES

These and other features, aspects, and advantages of the present invention are better understood when the following Detailed Description is read with reference to the accompanying drawings, wherein:
FIG. 1 is a block diagram of a haptic handheld communication device according to an embodiment of the present invention.
FIG. 2 is a flowchart depicting a method for using customized haptic effects to convey information to users of handheld communication devices, according to an embodiment of the present invention.
FIG. 3 is a flowchart depicting a method for using haptic logos to relate information to users of handheld communication devices in accordance with an embodiment of the present invention.
FIG. 4 is a flowchart depicting a method for haptically encoding communication signals in accordance with one embodiment of the present invention.
FIG. 5 is a flowchart depicting a method for providing haptic messaging to users of handheld communication devices in accordance with one embodiment of the present invention.
FIG. 6 is a flowchart illustrating a method for providing an interactive virtual touch in accordance with one embodiment of the present invention.
FIG. 7 is a flowchart illustrating a method for carrying out a chat session using handheld communication devices in accordance with one embodiment of the present invention.
FIG. 8 shows a flowchart depicting a method for using haptic effects to relate navigation information in accordance with one embodiment of the present invention.
FIG. 9 is a flowchart illustrating a method for providing haptic effects to a remote control in accordance with one embodiment of the present invention.
FIG. 10A is a diagram illustrating the user interface navigation event of scrolling in accordance with one embodiment of the present invention.
FIG. 10B is a diagram illustrating the user interface navigation event of reaching the end of a list in accordance with one embodiment of the present invention.
FIG. 10C is a diagram illustrating the user interface navigation event of wrapping around to the beginning of the list in accordance with one embodiment of the present invention.
FIG. 10D is a diagram illustrating the user interface navigation event of selecting a menu item from a list in accordance with one embodiment of the present invention.
FIG. 10E is a diagram illustrating the user interface navigation event of selecting an icon in accordance with one embodiment of the present invention.
FIG. 10F is a diagram illustrating the user interface navigation event of selecting a favorite menu item in accordance with one embodiment of the present invention.
FIG. 10G is a diagram illustrating the use of dedicated keys such as Send and End.

### DETAILED DESCRIPTION

Embodiments described in the following description are provided by way of example to illustrate some general principles of the invention, and should not be construed as limiting the scope of the invention in any manner. Those of ordinary skill in the art having the benefit of this disclosure will now also recognize that various changes and modifications can be made herein, without departing from the principles and scope of the invention.

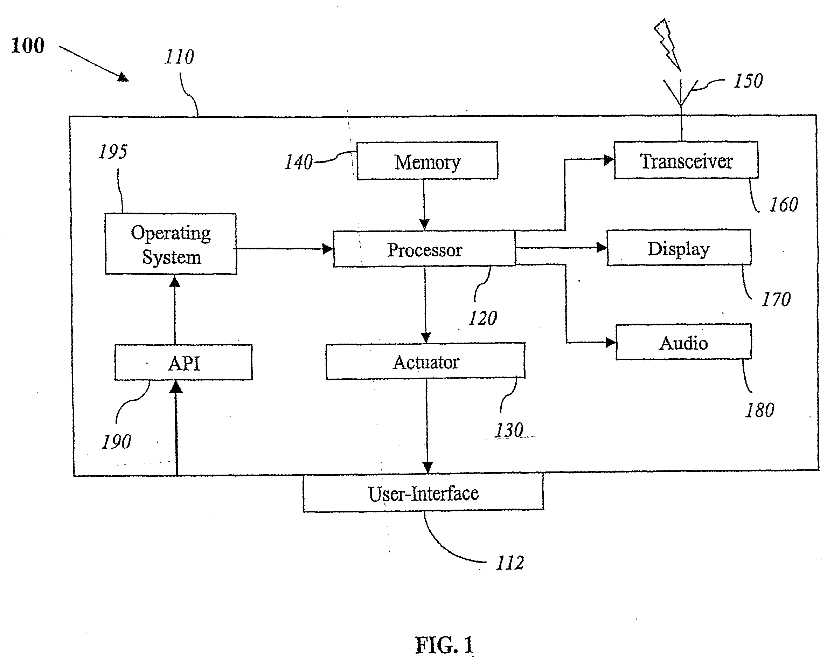

FIG. **1** depicts a block diagram of a handheld communication system incorporating device **100** in accordance with one embodiment of the present invention. It will be appreciated that various elements are shown in schematic form for illustrative purposes and are not drawn to scale. It will also be appreciated that many alternative ways of practicing the present invention exist. Accordingly, various changes and modifications may be made herein, without departing from the principles and scope of the invention.

Device **100** includes a device body including a housing **110** and a user-interface **112**; a processor **120**; at least one actuator **130** in communication with processor **120**; and a memory **140** in communication with processor **120**. Device **100** also includes an antenna **150** and a transceiver **160**, in communication with processor **120**. Device **100** additionally includes a display module **170** and an audio module **180**, in communication with processor **120**. Display module **170** may include, for example, a liquid crystal device. Audio means **180** may include, for example, a speaker, a microphone, and the like.

For purpose of illustration in the embodiment of FIG. **1**, processor **120**, actuator **130**, and memory **140** are shown to be enclosed within and coupled to the device body. Such an illustration, however, should not be construed as limiting the scope of the invention in any manner. In alternative embodiments, actuator **130** may, for example, be coupled to the outside of housing **110**, or embedded in housing **110** via a suitable mechanism. Further, user-interface **112** may include one or more user-interface members. As used herein, a user-interface member includes, without limitation, a key pad having one or more keys, one or more buttons, a touch screen or touch pad, a scroll wheel, a direction pad, a trackball, a knob, a miniature joystick, or other user-interface means known in the art.

Device **100** further includes an API (Application Program Interface) **190**, working in conjunction with an operating system **195**. A device driver (not shown) may optionally provide an interface between operating system **195** and processor **120**.

Memory **140** of device **100** stores a program code that includes instructions to cause processor **120** to perform various tasks. The following description provides some examples.

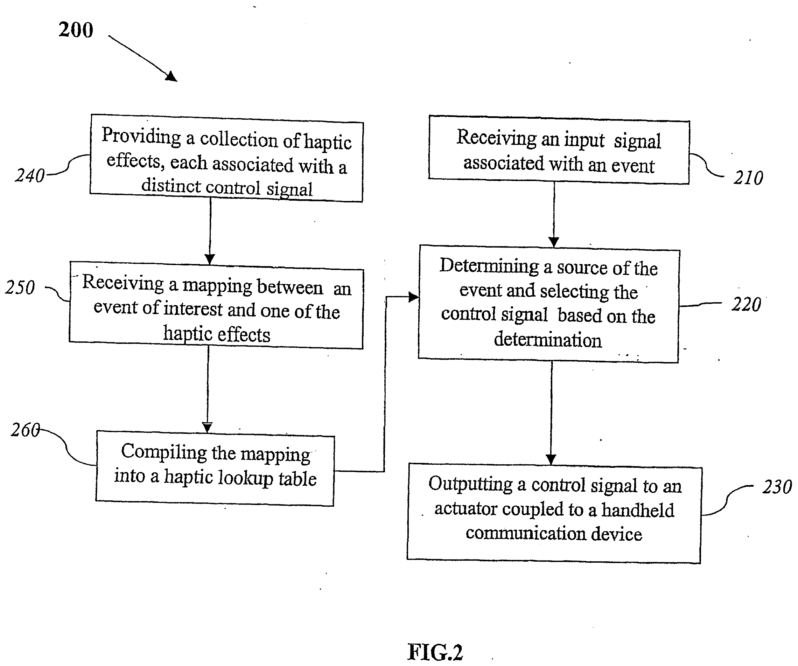

FIG. **2** shows a flowchart **200** depicting a method of using customized haptic effects to convey information to users of handheld communication devices, according to an embodiment of the invention. At step **210**, an input signal associated with an event is received. At step **220**, a source of the event is determined and a control signal is selected based on the determination. At step **230**, a control signal is output to an actuator coupled to a handheld communication device (see FIG. **1** for an embodiment of such device). The control signal is configured to cause the actuator to output a haptic effect associated with the event.

Furthermore at step **240**, a collection of haptic effects is provided, each haptic effect being associated with a control signal. For example, memory **140** of FIG. **1** can store a program code that includes instructions to generate the control signals (e.g., each characterized by a distinct waveform) for rendering the corresponding haptic effects. Haptic effects (along with associated control signals) may also be downloaded or transmitted from a remote source, such as a service provider, a network resource, a Web server, a remote handheld communication device or computer. Such downloaded or transmitted haptic effects can be further edited or modified. It is envisioned that third-party applications for handheld communication devices may enable users to purchase and download additional haptic effects as well as to edit and modify them. The haptic effects may also be provided in the form of a bundled package that also includes visual effects and audio effects which may or may not be configured to be synchronized with the haptic effects.

At step **250**, a mapping between an event of interest and one of the stored haptic effects is received. By way of example, memory **140** of FIG. **1** may also store a program code that enables a user to map an event of interest to one of the haptic effects as provided, e.g., via user-interface **112** through API **190**, where the event may be identified by its source. At step **260**, the one-to-one mappings made between various events of interest and the corresponding haptic effects are compiled into a haptic lookup table, which can, for example, be stored in memory **140** of FIG. **1**.

In the embodiment of FIG. **2**, the term "selecting" includes, without limitation, looking up a predetermined mapping between the event of interest and a corresponding haptic effect based on the source determination, and selecting or generating a control signal that is configured to render the desired haptic effect associated with the event (e.g., upon being applied to an actuator). Selection can be made based upon the aforementioned haptic lookup table, for example. In one embodiment, the input signal may include a communication signal associated with a call event, such as a voice call, an e-mail, or a message in text or multimedia form, which may be received via antenna 150 and transceiver 160 of FIG. 1, for example. The "source" of a call event may be related to a characteristic that distinctly identifies or characterizes the call event, such as the caller's phone number, the sender's e-mail address, a graphical feature or an icon associated with the incoming message, etc.

In accordance with another embodiment of the present invention, the input signal may be associated with a service carrier event specific to a user's wireless service carrier or wireless service plan. Notifications of service carrier events are intended to help a user manage phone calls. Service carrier events include an entering of a service zone, a weak carrier signal, a passage of an increment of time allotted in accordance with a mobile service plan, a roaming alert, a powering on of a handheld communication device and a powering off of a handheld communication device.

Certain service carrier events may depend upon where a user is in relation to the geographical coverage of his service carrier's network. In accordance with one example of this embodiment, a traveling user may feel a particular haptic effect when he enters the service zone of his service provider, when he receives a signal of a certain strength or when he leaves the service zone of his service provider. Such a notification informs a user of when he can make or receive calls, emails, SMS messages, etc. When outside the service carrier network, a user may be roaming, or using a visited network. Usage of a visited network may depend upon the roaming agreement between his service carrier provider and the visited network. With many service plans, roaming phone calls incur additional charges, and therefore a user may wish to receive haptic effects to notify him of such roaming. In accordance with another example of this embodiment, a user may feel a particular haptic effect when he has used up a certain increment of time in accordance with his service plan. Such a notification helps the user keep track of his cell phone usage and the service charges he is incurring.

In accordance with yet another example of this embodiment, a user may feel a particular haptic effect specific to the user's service carrier when the user is powering on the handheld communication device or powering off the handheld communication device.

The "source" of a service carrier event may be related to a user's service carrier or a graphical feature, icon or logo associated with the service carrier.

In accordance with yet another embodiment of the present invention, the input signal may be associated with a connection event such as a sending of an outgoing e-mail, a sending of an outgoing SMS message, a dropped call, a connected call, a passage of an increment of time when connected to a call, a push-to-talk ready alert, a push-to-talk receiving alert, and a push-to-talk when the line is busy alert. A connection event depends upon a user's connection status to a service network.

Push-To-Talk (PTT) is a two-way communication service that works like a "walkie talkie." A normal cell phone call is full-duplex, meaning both parties can hear each other at the same time. PTT is half-duplex, meaning communication can only travel in one direction at any given moment. To control which person can speak and be heard, PTT requires the person speaking to press a button while talking and then release it when they are done. The listener then presses their button to respond. This way the system knows which direction the signal should be traveling in.

A push-to-talk ready alert notifies the user when the system is ready for him to speak. A push-to-talk receiving alert notifies the user of a received push-to-talk call. A push-to-talk busy alert notifies a user making a push-to-talk call that the recipient's line is busy.

The source of a connection event may be related to a characteristic that distinctly identifies or characterizes the connection event, such as the other party's phone number, or the recipient's e-mail address.

In accordance with yet another embodiment of the present invention, the input signal may be associated with a user interface navigation event, for example scrolling, reaching the bottom of a list, wrapping around to the first item in a list, selecting an item on a list, selecting an item designated as a favorite, or use of a dedicated key.

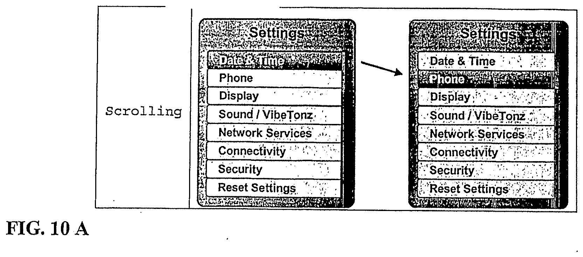

As an example of this embodiment, in Figure 10A, the User presses the down key to navigate to the next item in a list menu. The user feels a gentle single-bump effect indicating simple movement across menu items. The user navigates to the bottom of the list and presses the down key. Since this is the last item, the visual highlight does not change.

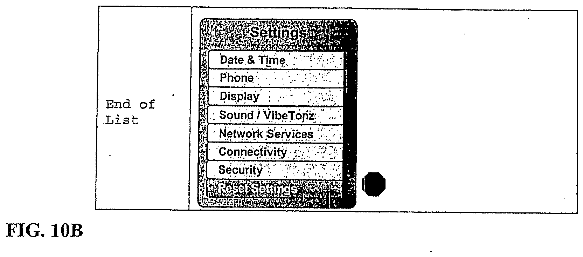

In Fig. 10B, the user feels a double-bump effect, notifying them that there are no more items in the list. The same effect should be felt at the top of the list.Table 2: Example of Typical User Interface Navigation Events and Associated Haptic Events.

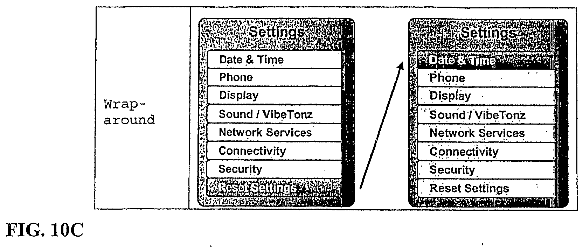

In Fig. 10C, The last item in a list is highlighted and the user presses the down key to wrap-around to the first item in the list. The user feels a strong single-bump effect. The same effect should be felt when wrapping around in the other direction (from the first to the last item).

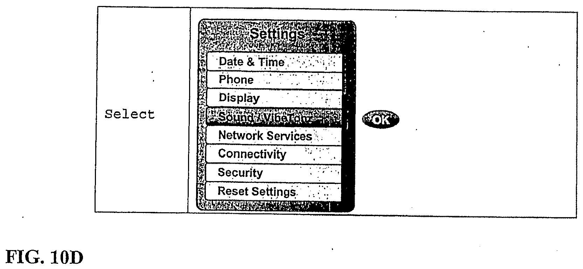

In Fig. 10D, the user presses the OK button to select a highlighted item from a list. The user feels a quick pulse to indicate the item was successfully selected.

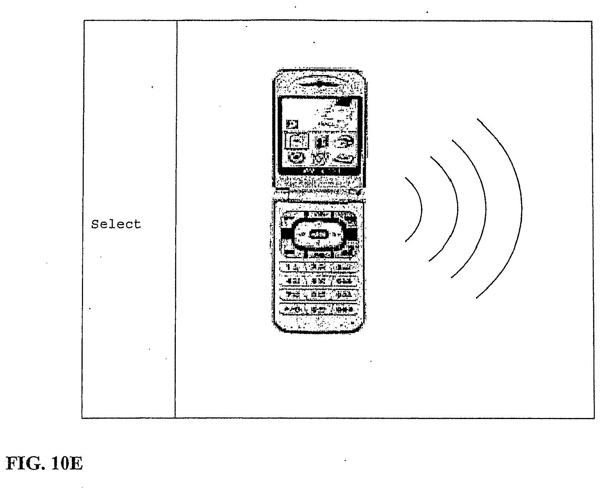

In Fig. 10E, the user presses the OK button to select a highlighted icon.
The user feels a quick pulse to indicate the icon was successfully selected.

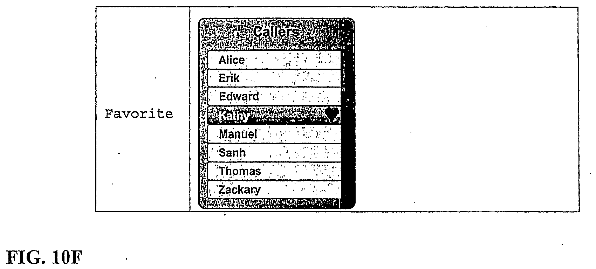

In Fig. 10F, certain items in a list may be accented by playing a unique haptic effect instead of the single-bump when scrolling to them. In this example, Kathy is the favorite. Since a unique haptic effect will be felt when highlighting Kathy, the user is able to scroll and select this favorite without looking at the display.

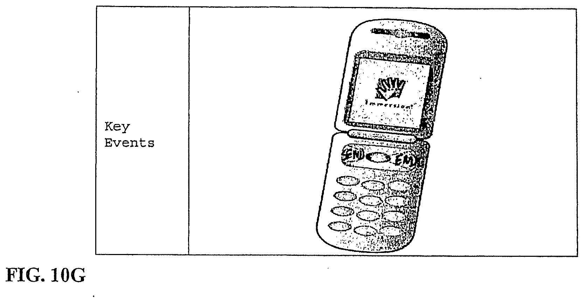

In Fig. 10G, dedicated keys, such as **Send** and **End**, may have a specific haptic navigation effect associated with them that will confirm the button press. Keys that do not have a dedicated function should not directly trigger a VibeTonz navigation effect. Instead, the navigation effect should be based on the context of the button press in the application to avoid interfering with other applications.

There are many possibilities for creating favorites, including items that are manually marked by the user and items that an application may programmatically classify as a favorite. An example of programmatically created favorites could be an enhanced contact application, wherein the first contact for every letter of the alphabet is marked as a favorite. In this way as a user scrolls through the alphabetized list he could feel that he has now reached the section beginning with "B", then "C" and so on.

The source of a user-interface navigation event may be related to the medium that is navigated (e.g. the type of menu or list), the type of item being selected (e.g. "Mark" v. "Kathy"), or the consequence of using a dedicated key (e.g. Send v. Save).

In accordance with another embodiment of the present invention, the input signal may be associated with a reminder event, which may be a self-generated message on the handheld communication device serving as a reminder for a pre-scheduled activity (e.g., an appointment or a meeting). The source in this scenario may be associated with the type of a pre-scheduled activity (e.g., a business meeting vs. a restaurant reservation), or the time at which the pre-scheduled activity takes place.

In accordance with one embodiment of the present invention, the input signal may include a communication signal associated with a handheld communication device power signature event.

In accordance with another embodiment of the present invention, the input signal may include a communication signal associated with a status event, for example, received via antenna **150** and transceiver **160** of FIG. **1**. Examples of a status event include, but are not limited to: an advertisement (e.g., sale) event, a one-to-one marketing event, a business-transaction event, a stock-trading event, a weather-forecast event, a sports (or game) event, an entertainment event, and an emergency (e.g., 911) event. In this scenario, the source may be associated with a characteristic that distinctly identifies the sender and/or the nature of a status event, such as the phone number of the handheld user's stock broker, the e-mail address of the user's favorite store, the logo associated with the user's favorite TV or radio station, and so on.

In accordance with yet another embodiment of the present invention, an event of interest can be accompanied by a distinct haptic effect, or overlapping haptic effects, conveying to the user customized information such as "who is calling," "what is happening," and so on. The user can also be allowed to update the haptic lookup table, e.g., to include new events, and/or to modify the mappings between the existing events of interest and the corresponding haptic effects.

Moreover, a specific haptic effect can be assigned to any incoming signal event whose source is unknown, so as to alert the user that the incoming message is from an unidentifiable or sender.

As used herein, the term "handheld communication device" includes, without limitation, a mobile phone such as a cellular phone or a satellite phone, a personal digital assistant (PDA), a cordless telephone, a pager, a two-way radio, a handheld or portable computer, a game console controller, a personal gaming device, an MP3 player, or other personal electronic devices known in the art that are equipped with communication or networking capabilities.

In accordance with one embodiment of the present invention, the aforementioned haptic effects can be used as haptic ringers (e.g., counterparts to auditory ring tones) that are customized or personalized to convey information to the user about various events of interest. By way of example, a haptic ringer associated with a call from a loved one (e.g., the user's spouse) may comprise low-amplitude and high frequency vibrations that impart gentle sensations to the user. In contrast, a haptic ringer associated with an emergency event (such as a 911-call) may comprise jolt-like pulses that impart pounding sensations to the user.

In contrast with conventional auditory ring tones, the aforementioned haptic effects (e.g., haptic ringers) are more desirable in an environment where extraneous auditory signals are prohibited (e.g., during a meeting or a concert), and/or where it is difficult to distinguish auditory signals (e.g., in a loud environment such as an airport). The haptic ringers are also more suitable in distracting situations such as driving, so that the user of a handheld communication device can keep eyes on the road without having to look at the device. Moreover, such haptic ringers convey customized information to the user, so that the user is aware of "who is calling," "what is happening," and so on, as the following examples further illustrate.

A handheld communication device such as a mobile phone may be configured to allow a user to include haptic information or a haptic code in an outgoing communication signal, e.g., carrying a voice call, an e-mail, or a message. The encoding of a communication signal with haptic information may be based on an established scheme or protocol, and/or on a per-system basis. The haptic code is configured to cause a haptic effect to be output when the communication signal is delivered to another handheld communication device. In one embodiment, businesses and organizations may each be associated with a distinct haptic logo (e.g., a particular vibration pattern) and include their haptic logos in various messages sent to the handheld communication devices of their customers. Such haptic logos can serve as counterparts to conventional logos known in the art, for example. Various status events mentioned above may also be transmitted in this manner. By way of example, a merchant may include its haptic logo in various advertisement events and business transaction events to be transmitted to the handheld communication devices of its customers. Stock brokers (or brokerage firms), TV or radio stations, and marketing/advertising agencies may likewise include their haptic logos in various stock-trading events, weather-forecast events, sports events, entertainment events, and one-to-one marketing events to be transmitted to the handheld users.

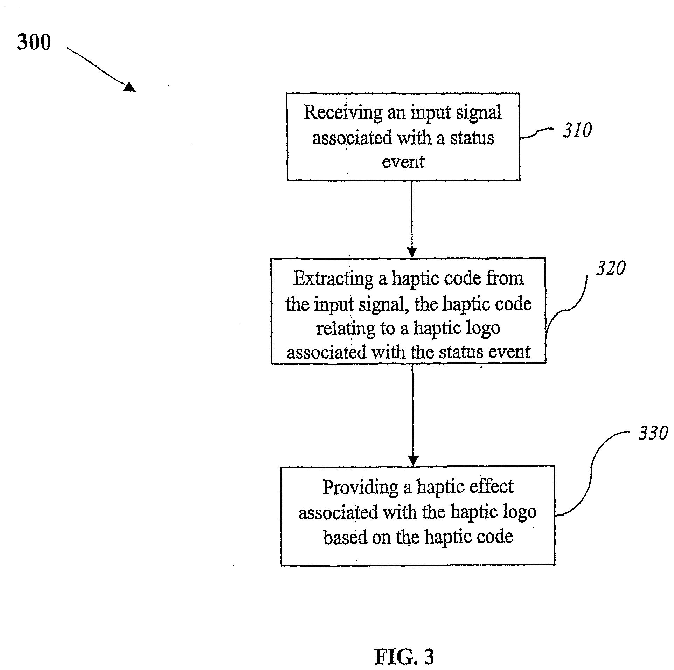

FIG. **3** is a flowchart **300** depicting a method of using haptic logos to relate information to users of handheld communication devices, according to an embodiment of the invention. A handheld communication device receives an input signal at step **310**, the input signal being associated with a status event. The handheld communication device extracts a haptic code from the input signal at step **320**, where the haptic code is associated with a haptic logo. At step **330**, the handheld communication device provides a haptic effect associated with the haptic logo. Step **330** may include providing a control signal to an actuator coupled to the handheld communication device, where the control signal is based at least in part on the haptic code and configured to cause the actuator to output the haptic effect.

In accordance with one embodiment of the present invention, the extracted haptic code may be directly applied to the actuator for rendering the desired haptic effect. In another embodiment, the haptic code may be configured according to a predetermined scheme or protocol that includes, for example, a table of haptic codes (some of which may be associated with one or more haptic logos) versus control signals for rendering the corresponding haptic effects. In this way, a processor in the handheld communication device can look up the corresponding control signal from the table based on the extracted haptic code, and output the selected control signal to the actuator for rendering the desired haptic effect.

In the embodiments illustrated in FIG. **2** or **3**, the handheld communication device (or the haptic code) may be programmed such that the haptic effect is output immediately, or at a prescribed time after receiving the input signal, as desired in applications. The haptic effects can also be triggered by, or synchronized with, other occurrences.

A handheld communication device may be further configured such that some of its user-interface members (such as those described above) are each associated with a haptic code, e.g., according to a predetermined scheme or protocol. In one embodiment, some of these haptic codes may be associated with haptic effects that emulate expressions or behaviors, such as "laugh," "giggle," "hug," "high-five," "heartbeat," "pet purring," etc. This allows haptic effects to be transmitted and experienced, e.g., in an interactive conversation or a chat session, by pressing or manipulating such members.

By way of example, suppose that user A (termed "Alice" herein) is engaged in a chat session with user B (termed "Bob" herein) via their respective mobile phones. In one embodiment, when Bob tells Alice a joke, Alice can respond by sending a "laugh" sensation to Bob, e.g., by pressing a key on her mobile phone that is assigned with a haptic code corresponding to a laugh sensation. This causes a signal to be transmitted from Alice's phone to Bob's phone, and a corresponding haptic effect to be output to Bob's phone (and thereby experienced by Bob). In accordance with alternative embodiments, Alice can include a haptic code in an outgoing message (which may also contain a video image such as a picture taken by her mobile phone, and/or a graphical feature such as an emoticon emulating a smiley face) to be transmitted to Bob, e.g., by pressing the corresponding user-interface member. The haptic code causes a haptic effect to be output when the message is delivered to a remote device such as Bob's mobile phone. In accordance with one embodiment, the haptic effect may be correlated or synchronized with the displaying of a video image contained in the message. In accordance with another embodiment, the generation of the haptic effect based on the haptic code may be carried out in a manner similar to that described above with respect to the embodiment of FIG. **3**.

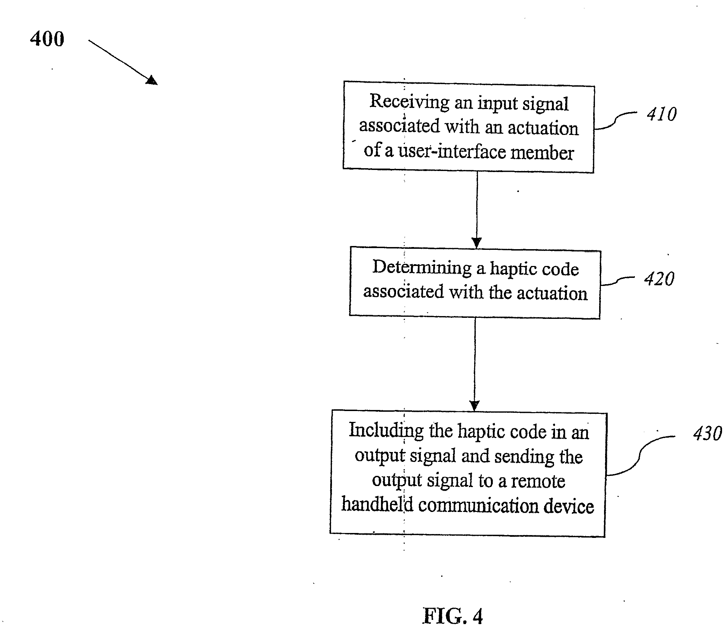

FIG. **4** depicts a flowchart **400** illustrating a method of a method of haptically encoding communication signals, according to an embodiment of the invention. At step **410**, an input signal associated with an actuation of a user-interface member is received. By way of example, the input signal may be associated with Alice's pressing or manipulating a particular user-interface member. At step **420**, a haptic code associated with the actuation is determined. At step **430**, the haptic code is included in an output signal, and the output signal is sent to a remote handheld communication device. As described above, the output signal may also include a message, a video image, and/or a graphical feature.

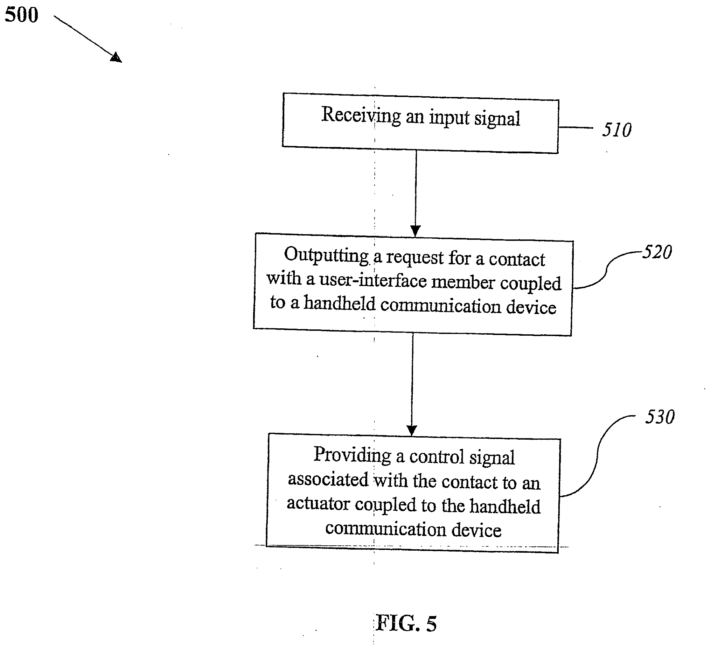

A handheld communication device may also be configured such that a haptic effect, along with a message, is output upon a contact with a user-interface member being made (e.g., by a user or an input device). FIG. **5** depicts a flowchart **500** illustrating a method of haptic message that can be associated with this situation, according to an embodiment of the invention. At step **510** of the flowchart **500**, a handheld communication device receives an input signal. At step **520**, the handheld communication device outputs a request for a contact with a user-interface member coupled to the handheld communication device. At step **530**, the handheld communication device provides a control signal associated with the contact to an actuator coupled to the handheld communication device. The control signal is configured to cause the actuator to output a haptic effect associated with the input signal. Step **520** may include having a visual effect displayed, an auditory effect played, and/or a distinctive haptic ringer output, which requests a contact with the user-interface member being made.

In accordance with one embodiment, the input signal in FIG. **5** may include a haptic code, along with a message, a video image, and/or a graphical feature, etc. For example, the haptic code may be configured to cause a "hug" sensation to be output when the video image contained in the input signal is displayed. The input signal may also contain a provision or protocol that specifies that the incoming message along with the corresponding haptic effect is output upon a contact with a particular user-interface member (e.g., the #5 key) being made. Alternatively, the handheld communication device may determine the user-interface member to be contacted, before outputting incoming message along with the corresponding haptic effect.

In accordance with another embodiment, the input signal of FIG. **5** may be associated with a "virtual touch," e.g., to mimic a handshake, a "high-five," a pat on the back, a pulse or heartbeat sensation, a pet purring sensation, or other touch sensations. associated with human (and/or human-animal) interactions. In one scenario, the input signal at step **510** may include a "virtual touch indicator," based on which the request for a contact with a particular user-interface member is made. The virtual touch indicator may be in the form of a haptic code, a message, or other informative means. The control signal at step **530** may be generated, e.g., based on the virtual touch indicator, a haptic code associated with the user-interface member at play, or other predetermined scheme. The input signal at step **510** may also include a virtual touch indicator along with a virtual touch signal for rendering the desired haptic effect. In this case, the control signal at step **530** may be based on the virtual touch signal.

Referring back to the chat session between Alice and Bob, by way of example at the end of their chat session, Alice may wish to send Bob a "high-five." She sends to Bob's mobile phone a signal including a virtual touch indicator, which in turn prompts a request that Bob be in contact with a user-interface member coupled to his phone, such as a direction pad (e.g., by putting his fingers on the individual keys of the direction pad), a key pad, a touch screen, a trackball, a joystick, or the like. The control signal for rendering a haptic effect that emulates a "high-five" may be based on the haptic code associated with the user-interface member, transmitted with the input signal from Alice, and/or other predetermined scheme.

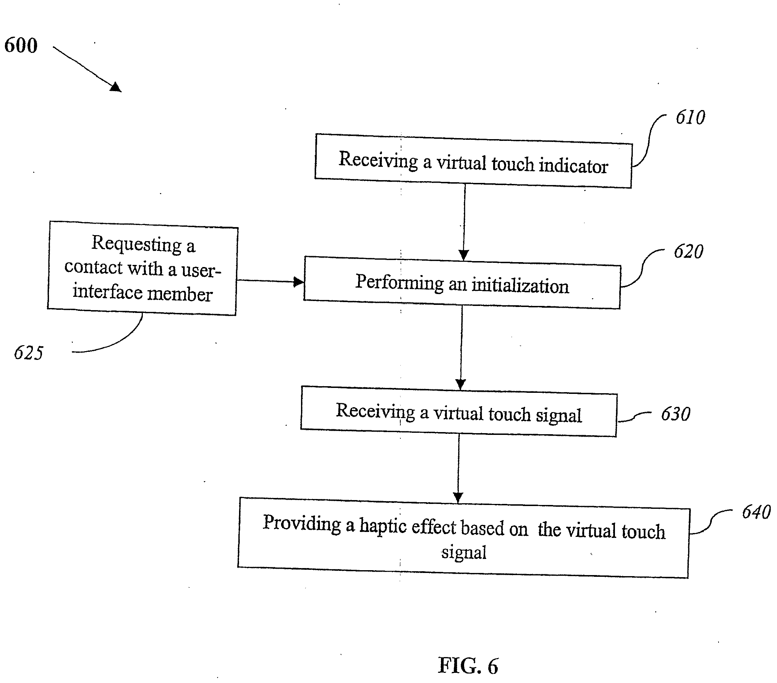

Interactive virtual touch can also be engaged between users of handheld communication devices, where the manipulation of a user-interface member on one handheld communication device is transmitted possibly in substantially real-time to another handheld device and experienced by its user, and vice versa. FIG. **6** depicts a flowchart **600** illustrating a method of providing interactive virtual touch in one embodiment of the present invention. In the embodiment shown, a handheld communication device first receives an input signal including a virtual touch indicator at step **610**. A distinctive haptic ringer may, for example, accompany the arrival of the virtual touch indicator, identifying the sender and the nature of the input signal. The handheld communication device may then perform any necessary initialization to enable the communication at step **620**, which may also include requesting a contact with a particular user-interface member coupled to the handheld communication device at step **625**. The handheld communication device subsequently receives a virtual touch signal in the communication associated with the desired haptic effect at step **630**. The handheld communication device provides the haptic effect at step **640**, e.g., by applying the virtual touch signal to an actuator coupled to the user-interface member.

In accordance with one embodiment, the virtual touch signal may be associated with the manipulation of a user-interface member on a remote handheld device and transmitted in substantially real-time. And the user on the receiving end may respond by acting in a similar fashion, so as to emulate an interactive touch. Any schemes for delivering virtual touch to users of handheld communication devices may be used.

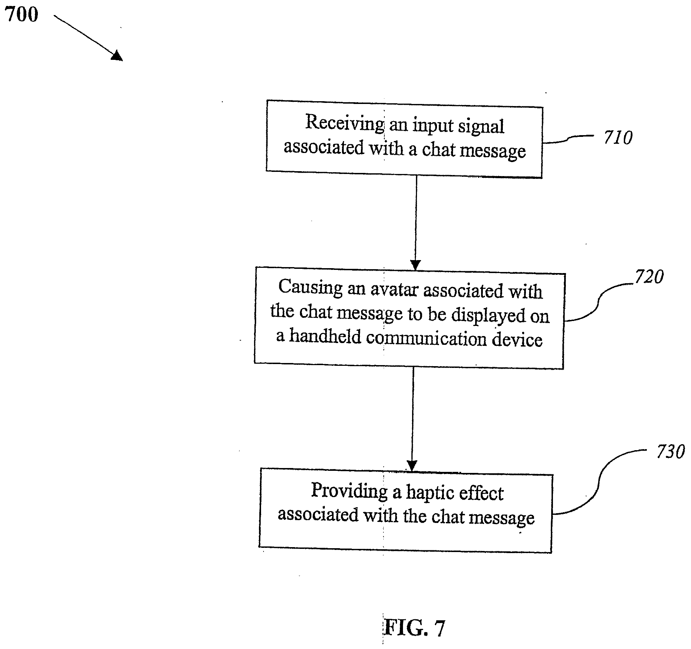

Haptic effects can also be used to enhance and complement the information content communicated between handheld communication devices. In accordance with one embodiment, a plurality of handheld communication users may be engaged in a chat session via their handheld communication devices. The users may each have a graphical representation or avatar displayed on other handheld communication devices. Such avatars can also be haptically enabled, for example, whereby their expressions and/or behaviors are accompanied and enhanced by corresponding haptic effects. FIG. **7** is a flowchart **700** depicting a method of carrying out a chat session using handheld communication devices, according to an embodiment of the invention. In the embodiment shown, a handheld communication device receives an input signal associated with a chat message at step **710**. The handheld communication device displays an avatar associated with the chat message at step **720**. The avatar may be shown on display **170** of FIG. **1**, in one embodiment. At step **730**, the handheld communication device provides a haptic effect associated with the chat message. Step **730** may include outputting a control signal to an actuator coupled to the handheld communication device, where the control signal is configured to cause the actuator to output the haptic effect. In accordance with one embodiment, the haptic effect may be correlated with an expression or behavior of the avatar, such as a laugh or giggle, a cry, a pet purring, or the like.

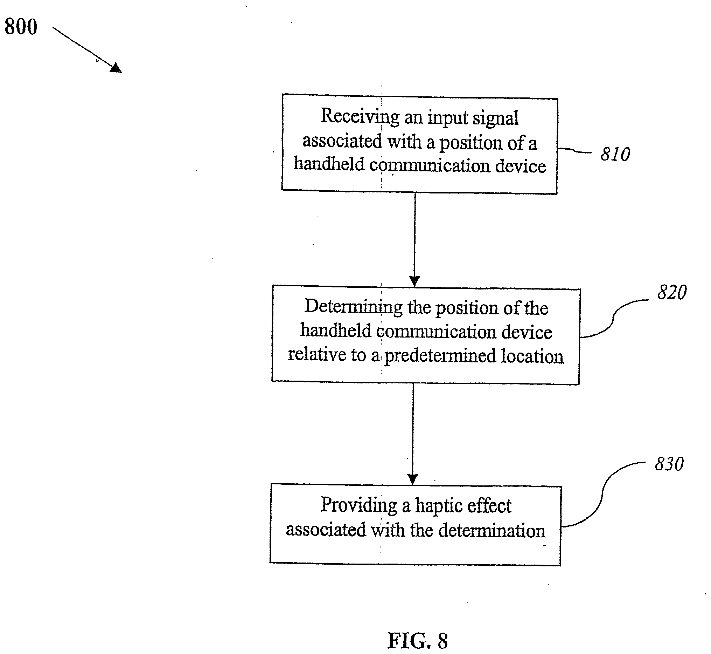

Handheld communication devices are increasingly equipped with navigation capability, for example, in communication with the Global Positioning System (GPS) or other navigation systems. Haptic effects can also be used to convey navigation information, such as positional and/or directional information, to handheld users. By way of example, FIG. **8** shows a flowchart **800** depicting a method of haptic navigation, according to an embodiment of the present invention. The flowchart **800** discloses receiving an input signal associated with a position of a handheld communication device at step **810**; determining the position of a handheld communication device relative to a predetermined location at step **820**; and providing a haptic effect associated with the determination at step **830**. Step **830** may include outputting a control signal associated with the determination to an actuator coupled to the handheld communication device, the control signal being configured to cause the actuator to output the haptic effect. Further, the input signal at step **810** may be received from GPS, a digital compass, or other navigation systems known in the art.

In accordance with one embodiment, the haptic effect may be associated with a distance between the position of the handheld communication device and a predetermined location (termed "destination" herein). For example, the haptic effect may include a vibration having a magnitude and a frequency, where at least one of the magnitude and the frequency decreases as the distance from the destination diminishes. Additionally, the haptic effect may be configured to convey a quantitative measure of the distance. By way of example, the haptic effect may include one or more pulse or jolt sensations, where the number of pulses is proportional to the number of miles between the position of the handheld device and the destination.

Processors described above (including processor **120** of FIG. **1**) can include, for example, one or more digital logical processors capable of processing input, execute algorithms, and generate output as necessary to perform various tasks, such as those described above. Such processors/controllers may include a microprocessor, an Application Specific Integrated Circuit (ASIC), state machines and the like. Such processors include, or may be in communication with, media (including memory **140** of FIG. **1**). Such media include, for example, computer readable media, which stores program code that, when executed by a processor, cause the processor to perform the steps described herein. Embodiments of computer-readable media include, but are not limited to, an electronic, optical, magnetic, or other storage or transmission device capable of providing a processor, such as the processor in a web server, with computer-readable instructions. Other examples of suitable media include, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other forms of computer-readable media may transmit or carry instructions to a computer, including a router, private or public network, or other transmission device or channel.

Program code and associated application programs related to various applications may also reside on a remote source, such as a network resource, a Web server, a remote handheld communication device or computer, which can be transmitted or downloaded to a handheld communication device on a regular or predetermined basis. Haptic effects (along with associated control signals) can also be downloaded or transmitted from a remote source, as described above.

Actuators described above (including actuator **130** shown in FIG. **1**) can include, for example, a pager motor, an eccentric rotating motor, a harmonic eccentric rotating motor, a voice coil, a solenoid, a resistive actuator, a piezoelectric actuator, an electro-active polymer actuator, or other types of active/passive actuators suitable for generating haptic effects. U.S. Patent Nos. 6,429,846 and 6,424,333 disclose further details relating to some of these actuators, both of which are incorporated in full herein by reference. In some embodiments, one or more actuators may be implemented in a handheld communication device, configured to deliver appropriate haptic effects. It will be appreciated that various control schemes can be devised accordingly, for controlling the actuator(s) in a manner that best achieves the desired haptic effects.

Referring back to FIG. **1**, actuator **130** may be coupled to housing **110**, thereby imparting haptic effects thus generated to the device body. Haptic ringers (or alerts) described above may be delivered in this manner, for instance. In another embodiment, actuator **130** may be coupled to user-interface **112** of the device body. For instance, an active and/or resistive actuator can be coupled to user-interface **112** to deliver a virtual touch described above. One or more actuators can also be coupled to user-interface **112**, for example, to convey a virtual touch such to a user. In yet another embodiment, a plurality of actuators can be coupled to housing **110** as well as user-interface **112**. In addition, one or more actuators may also be coupled to a headset, a wristband, or other accessory means associated with a handheld communication device.

Embodiments of the invention include the following.

In accordance with one embodiment of the present invention, an individual (or "Bob") can have a mobile phone according to the invention. The mobile phone also has an e-mail capability, for example, including both "receive" and "send"). The mobile phone is configured to provide a plurality of haptic effects, e.g., by including appropriate hardware (such as actuators described above) and program code. Bob can program the mobile phone, for example, via user-interface **112** through API **150** shown in FIG. **1**, by inputting various events of interest and associating each with a distinct haptic effect. Thus, when an event of interest is subsequently received, the mobile phone provides the corresponding haptic effect.

In accordance with one embodiment of the present invention, Bob's phone includes programming that provides a first haptic effect when an input signal is received from the mobile phone of Bob's wife (or "Alice"). Bob's phone also includes programming that provides a second haptic effect that is different and distinct from the first haptic effect, when an input signal is received from the mobile phone of Bob's supervisor at work (termed "Carol" herein). Bob's phone is further be configured to provide a third haptic effect that is different from the two mentioned above, e.g., when an e-mail is received from the e-mail address of Bob's stock broker (where the e-mail contains a "smiley-face" emoticon, for instance). The third haptic effect can be a vibration with high magnitude and short duration, e.g., to emulate a "high-five."

In accordance with another embodiment of the present invention, Bob can be watching a movie in a theater with his mobile phone in his pocket. It is set to make no noise, because Bob is in a theater. While Bob is watching the movie, Bob's mobile phone vibrates with the second haptic effect mentioned above. Bob chooses to ignore the call, because he does not wish to speak with his supervisor at a movie theater. Later, Bob's mobile phone vibrates with the first haptic effect. Bob wants to speak with Alice, for example, to make plans to meet later. So Bob answers the phone and quickly exits the theater to talk with Alice.

Bob's mobile phone can also include a personal schedule/calendar application. After speaking with Alice, Bob can enter an entry in the calendar at the 7:00PM time mark -- "Meet Alice". Bob can also choose a fourth haptic effect to associate with the calendar entry. The mobile phone can be programmed to output the fourth haptic effect fifteen minutes before the time entry of the calendar (i.e., at 6:45PM).

Bob's mobile phone can be equipped with GPS capability, along with an associated application program for location determination. Bob can also store addresses of various locations of interest in the application program. In one embodiment, Bob can be on the road. Bob's mobile phone vibrates with a distinct fifth haptic effect. Bob recognizes the fifth haptic effect being associated with the haptic logo of his favorite electronics store. He then checks with the application program, and receives a sixth haptic effect associated with the distance between his current position and the store location. Bob then decides to make a stop at the store.

A haptically-enabled handheld communication deyice of the invention may be further used as a two-way haptic remote control, for example, for controlling a remote system such as a Television set or a multimedia system. In one embodiment, the events as referred to above may be related to program channels shown on the remote system, each identified by a channel number (which may be used as the "source"), for instance. The corresponding haptic effects may be customized on a per-channel basis. Such haptic effects can serve to inform a user as to which channel is on, as a user is channel-surfing by way of this haptic remote control, so that the user need not to look up the display screen.

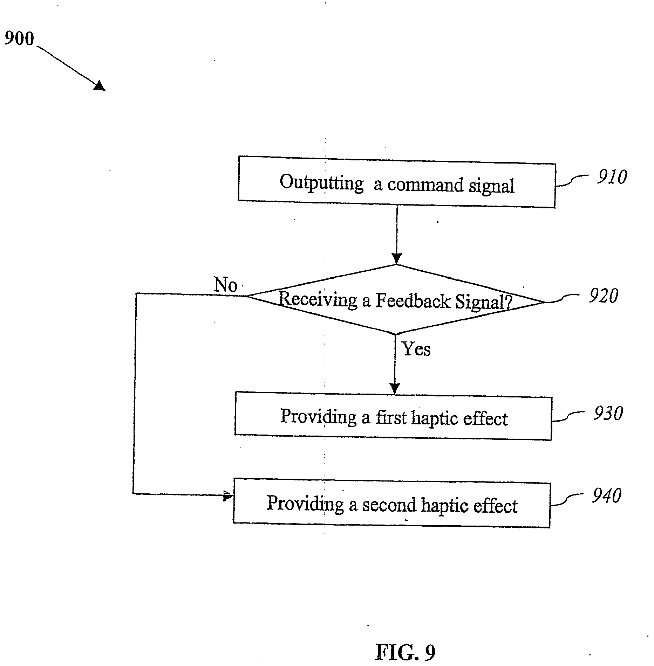

FIG. **9** depicts a flowchart illustrating a method for providing haptic effects to a remote control in one embodiment of the present invention. In the embodiment shown, the remote control sends a command signal to a remote system at step **910**. As with a conventional remote control, the signal may or may not reach the television. The remote control then determines whether a feedback signal has been received at step **920**. If the remote control receives a feedback signal, the remote control provides a first haptic effect at step **930**. If not, the remote control provides a second haptic effect at step **940**.

The first haptic effect can be further customized according to the received feedback signal. In one embodiment, the remote system provides information (e.g., via the feedback signal) to the remote control regarding the state of the display, e.g., based on a predetermined scheme. The remote control may use the information to determine a corresponding haptic effect to provide at step **930**. In alternative embodiments, the remote system may determine the appropriate haptic effect to provide and include a corresponding haptic code in the feedback signal. The remote control provides the haptic effect at step **930** based on this haptic code.

The foregoing description of the preferred embodiments of the invention has been presented only for the purpose of illustration and description and is not intended to be exhaustive or to limit the invention to the precise forms disclosed. Numerous modifications and adaptations thereof will be apparent to those skilled in the art without departing from the spirit and scope of the present invention.

## Claims

1. A method, comprising:
receiving, by a handheld communication device, an input signal, wherein the input signal is associated with a service carrier event that is specific to a wireless service carrier of the handheld communication device;
extracting a haptic code from the input signal;
determining a control signal based at least in part on the extracted haptic code, wherein the control signal is configured to cause an actuator of the handheld communication device to output a haptic effect, wherein the haptic effect is particular to the wireless service carrier; and
outputting the control signal to the actuator, thereby causing the haptic effect to be output at the handheld communication device;
wherein the determining the control signal comprises mapping the haptic code to one of a plurality of different control signals and then retrieving the mapped control signal from memory, wherein each different control signal is associated with a distinct haptic effect;
wherein the mapping to one of the different control signals is based at least on a geographic location of the handheld communication device relative to a geographic coverage of a service carrier's network, and each of the different control signals corresponds to a different geographic location relative to a geographic coverage of a service carrier's network.

2. A non-transitory computer-readable medium on which is encoded instructions when executed by one or more processors configure the one or more processors to:
receive, by a handheld communication device, an input signal that is associated with a service carrier event that is specific to a wireless service carrier of the handheld communication device;
extract a haptic code from the input signal;
determine a control signal based at least in part on the extracted haptic code, wherein the control signal is configured to cause an actuator of the handheld communication device to output a haptic effect, wherein the haptic effect is particular to the wireless service carrier; and
output the control signal to the actuator, thereby causing the haptic effect to be output at the handheld communication device;
wherein the determine the control signal comprises mapping the haptic code to one of a plurality of different control signals and then retrieving the mapped control signal from memory, wherein each different control signal is associated with a distinct haptic effect;
wherein the mapping to one of the different control signals is based at least on a geographic location of the handheld communication device relative to a geographic coverage of a service carrier's network, and each of the different control signals corresponds to a different geographic location relative to a geographic coverage of a service carrier's network.

3. An apparatus, comprising:
a body;
a processor; and
an actuator coupled to the body and in communication with the processor, wherein the processor is configured to:
receive an input signal that is associated with a service carrier event that is specific to a wireless service carrier of the apparatus;
extract a haptic code from the input signal;
determine a control signal based at least in part on the extracted haptic code, wherein the control signal is configured to cause the actuator to output a haptic effect,
wherein the haptic effect is particular to the wireless service carrier; and
output the control signal to the actuator, thereby causing the haptic effect to be output at the apparatus;
wherein the determine the control signal comprises mapping the haptic code to one of a plurality of different control signals and then retrieving the mapped control signal from memory, wherein each different control signal is associated with a distinct haptic effect;
wherein the mapping to one of the different control signals is based at least on a geographic location of the handheld communication device relative to a geographic coverage of a service carrier's network, and each of the different control signals corresponds to a different geographic location relative to a geographic coverage of a service carrier's network.

4. The apparatus of claim 3, wherein the apparatus is a handheld communication device, and wherein the body is included in the handheld communication device.

5. The apparatus of claim 3, wherein the apparatus is a handheld communication device, and wherein the handheld communication device comprises a cellular phone, a satellite phone, a cordless phone, a personal digital assistant, a pager, a two-way radio, a portable computer, a game console controller, a personal gaming device, or an MP3 player.

6. The method of claim 1, wherein outputting the control signal to the actuator further comprises:
outputting the control signal to the actuator at a prescribed time after receiving the input signal.

7. The method of claim 1, wherein the haptic code includes a prescribed time at which to provide the haptic effect, the method further comprising:
determining the prescribed time based on the extracted haptic code, wherein the haptic effect is to be output at the prescribed time.

8. A computer-implemented method for alerting users of service carrier events associated with mobile service plans, comprising:
accessing, by a handheld communication device, a wireless network associated with a wireless service carrier that provides a mobile service plan for the handheld communication device;
receiving, by the handheld communication device, an input signal that is associated with a service carrier event that is specific to the wireless service carrier;
extracting a haptic code from the input signal;
determining, by the handheld communication device, a control signal from a plurality of control signals associated with a collection of haptic effects based at least in part on the extracted haptic code; and
providing, by an actuator of the handheld communication device, haptic feedback based on the determined control signal;
wherein the determining the control signal comprises mapping the haptic code to one of the plurality of different control signals and then retrieving the mapped control signal from memory, wherein each different control signal is associated with a distinct haptic effect;
wherein the mapping to one of the different control signals is based at least on a geographic location of the handheld communication device relative to a geographic coverage of a service carrier's network, and each of the different control signals corresponds to a different geographic location relative to a geographic coverage of a service carrier's network.

9. The method of claim 8, wherein outputting the control signal to the actuator further comprises:
outputting the control signal to the actuator at a prescribed time after receiving the input signal.

10. The method of claim 8,
wherein the haptic code includes a prescribed time at which to provide the haptic effect; and wherein the method further comprises:
determining the prescribed time based on the extracted haptic code, wherein the haptic effect is to be output at the prescribed time.

11. The method of claim 1, wherein the haptic code is further associated with a haptic logo that corresponds to the wireless service carrier that is operative in the geographic location.

12. The non-transitory computer-readable medium of claim 2, wherein the haptic code is further associated with a haptic logo that corresponds to the wireless service carrier that is operative in the geographic location.

13. The apparatus of claim 3, wherein the haptic code is further associated with a haptic logo that corresponds to the wireless service carrier that is operative in the geographic location.

14. The method of claim 8, wherein the haptic code is further associated with a haptic logo that corresponds to the wireless service carrier that is operative in the geographic location.

15. The method of claim 1, wherein a first geographic location causes the haptic code to be mapped to a first control signal, and a second geographic location that is different than the first geographic location causes the haptic code to be mapped to a second control signal that is different than the first control signal;
wherein the first control signal is associated with a first haptic logo of a first wireless service carrier that provides service in the first geographic location, and the second control signal is associated with a second haptic logo of a second wireless service carrier that provides service in the second geographic location.

16. The non-transitory computer-readable medium of claim 3, wherein a first geographic location causes the haptic code to be mapped to a first control signal, and a second geographic location that is different than the first geographic location causes the haptic code to be mapped to a second control signal that is different than the first control signal;
wherein the first control signal is associated with a first haptic logo of a first wireless service carrier that provides service in the first geographic location, and the second control signal is associated with a second haptic logo of a second wireless service carrier that provides service in the second geographic location.

17. The apparatus of claim 3, wherein a first geographic location causes the haptic code to be mapped to a first control signal, and a second geographic location that is different than the first geographic location causes the haptic code to be mapped to a second control signal that is different than the first control signal;
wherein the first control signal is associated with a first haptic logo of a first wireless service carrier that provides service in the first geographic location, and the second control signal is associated with a second haptic logo of a second wireless service carrier that provides service in the second geographic location.

18. The method of claim 8, wherein a first geographic location causes the haptic code to be mapped to a first control signal, and a second geographic location that is different than the first geographic location causes the haptic code to be mapped to a second control signal that is different than the first control signal;
wherein the first control signal is associated with a first haptic logo of a first wireless service carrier that provides service in the first geographic location, and the second control signal is associated with a second haptic logo of a second wireless service carrier that provides service in the second geographic location.
